# EUROPÄISCHE PATENTSCHRIFT

(11) **EP 3 015 688 B1**
(45) Veröffentlichungstag und Bekanntmachung des Hinweises auf die Patenterteilung: **14.03.2018**
(21) Anmeldenummer: 15002782.9
(22) Anmeldetag: 28.09.2015
(51) Int. Cl.: F02D 41/02, F02D 29/06, H02P 9/04, F02D 19/02, F02D 41/00

(54) **VERFAHREN ZUM BETREIBEN EINER BRENNKRAFTMASCHINE**
METHOD FOR OPERATING A COMBUSTION ENGINE
PROCEDE DESTINE AU FONCTIONNEMENT D'UN MOTEUR A COMBUSTION INTERNE

(30) Priorität: 30.10.2014 AT 7962014
(43) Veröffentlichungstag der Anmeldung: 04.05.2016
(73) Patentinhaber: GE Jenbacher GmbH & Co. OG, 6200 Jenbach (AT)
(72) Erfinder: Hirzinger-Unterrainer, Johann, 6345 Koessen (AT); Liebscher, Uwe, 6330 Kufstein (AT); Thalhauser, Josef, 83191 Nussdorf (DE); Schaumberger, Herbert, 6232 Muenster (AT)
(74) Vertreter: Torggler & Hofinger Patentanwälte

(56) Entgegenhaltungen:
- EP-A2- 2 868 903
- WO-A1-2011/088483
- WO-A2-2012/135258

## Beschreibung

Die Erfindung betrifft ein Verfahren zum Betreiben einer Brennkraftmaschine mit den Merkmalen des Oberbegriffs von Anspruch 1. Weiters betrifft die Erfindung ein Genset mit den Merkmalen des Oberbegriffs des Anspruchs6.

Stationäre Kraftanlagen, bestehend aus wenigstens einer Brennkraftmaschine und wenigstens einem Generator werden häufig im Netzparallelbetrieb eingesetzt, wobei sie Energie in ein Stromversorgungsnetz speisen. Für derartige Anwendungen eignen sich insbesondere Gasmotoren, d. h. Brennkraftmaschinen, die mit gasförmigem Treibstoff ottomotorisch betrieben werden, da sie einen hohen Wirkungsgrad und eine geringe Schadstoffemission aufweisen.
Im Netzparallelbetrieb gibt das Energieversorgungsnetz die Sollspannung und die Sollfrequenz, sowie die Phase der Wechselspannung des Wechselstromgenerators vor.

Kommt es zu einem Spannungseinbruch oder einer -schwankung im Energieversorgungsnetz, d.h. zu einem dynamischen Netzfehler, steigt ohne geeignete Gegenmaßnahmen die Drehzahl der Brennkraftmaschine und des damit verbundenen Wechselstromgenerators aufgrund des Wegfalls des Widerstandes durch das Energieversorgungsnetz rasch an.

Unter dynamischen Netzfehlern versteht man Spannungseinbrüche oder -schwankungen im Bereich von wenigen 100 Millisekunden (ms) bis zum Beispiel weniger als 700 ms, bevorzugt 500 ms.

Spannungseinbrüche im Energieversorgungsnetz werden in als "Low voltage events" bezeichnet.

Bei Anwendungen im Netzparallelbetrieb gibt es häufig Vorgaben an die einspeisenden Kraftanlagen mit dem Ziel, den Netzfehler nicht weiter zu verschlimmern.

Das Vermögen einer Energieversorgungseinheit während eines dynamischen Netzfehlers geeignet zu reagieren, sprich mit dem Netz verbunden zu bleiben ohne das Netz negativ zu beeinflussen, wird als "fault ride through" (FRT) bzw. - bezogen auf Spannungseinbrüche - als "Low-voltage-ride through" (LVRT) bezeichnet.

Aus dem Stand der Technik sind einige Regelungsverfahren bekannt, die ein Ansteigen der Drehzahl der Brennkraftmaschine (Hochdrehen) im Falle eines Lastabfalls verhindern sollen.

So beschreibt die AT 413 132 B eine Regeleinrichtung, die zum Lastabwurf die Drosselklappe auf eine von der vollständigen Schließstellung abweichende zulässige Minimalstellung einstellt und zur Verhinderung von Überdrehzahl mindestens einen Zylinder abschaltet.

Die AT 509 558 B1 beschreibt ein Verfahren, bei dem bei einem Überschreiten der Ist-Drehzahl des Wechselstromgenerators oder der Brennkraftmaschine über einen vorgebbaren Maximalwert durch einen Ausfall des Energieversorgungsnetzes die Verbrennung in der Brennkraftmaschine wenigstens teilweise gestoppt wird, während die Verbindung zum Energieversorgungsnetz aufrecht erhalten wird.

Bei diesem Verfahrens vermindert die Regeleinrichtung oberhalb eines vorgebbaren Grenzwertes für die Drehzahl die Treibstoffzufuhr zur Brennkraftmaschine und/oder stoppt wenigstens eine Zündeinrichtung, während die Verbindung von Wechselstromgenerator und Energieversorgungsnetz aufrechterhalten bleibt.

Aus der EP 2 433 355 B1 ist ein Verfahren bekannt, bei dem in Antwort auf abrupte Änderungen der elektrischen Last jene Kraftstoffzufuhr der Brennkraftmaschine beibehalten wird, welche vor Detektion des Spannungseinbruches bestanden hat, während gleichzeitig die Zündung der Brennkraftmaschine verändert wird, um die von der Brennkraftmaschine abgegebene Leistung zu verringern und/oder es wird das Erregerfeld des Generators erhöht, um das Moment auf den Generator zu erhöhen, um so den Widerstand auf die Brennkraftmaschine und den Generator im Gleichgewicht zu halten.

Die US20110180043 A1 zeigt eine Brennkraftmaschine zur Stromerzeugung (Genset) mit elektronischer Kraftstoffeinspritzung, wobei bei Laständerungen Zündzeitpunkt und Kraftstoffeinspritzung in Abhängigkeit elektrischer Größen und der Kurbelwellenposition veränderbar sind.

Die im Stand der Technik gezeigten Regelungskonzepte sehen also eine Kraftstoffreduktion oder allenfalls ein Beibehalten einer vor Auftreten des Netzfehlers bestehenden Kraftstoffzufuhr bei gleichzeitiger Änderung der Zündung vor, um während des Spannungseinbruches im Netz die von der Brennkraftmaschine abgegebene Leistung zu reduzieren.

Beide Maßnahmen bewirken eine Absenkung der Antriebsleitung der Brennkraftmaschine, was vor allem bei einem länger dauernden Netzfehler (ab etwa 100 ms) im Falle der Netzwiederkehr massive Probleme mit den Vorgaben des Netzbetreibers zur Folge haben kann.

In der nicht gattungsgemäßen, prioritätsälteren aber nicht vorveröffentlichten österreichischen Patentanmeldung A 832/2013 der Anmelderin geht es darum, die in einem sehr kurzen Zeitraum von einigen wenigen Vielfachen von 10 Millisekunden nach einem Netzfehler auftretenden Auswirkungen der subtransienten Effekte eines Kurzschlussvorganges zu behandeln.

Aufgabe der vorliegenden Erfindung ist es, ein Verfahren und ein Genset anzugeben, welche diese Nachteile nicht aufweisen.

Die Aufgabe wird gelöst durch ein Verfahren mit den Merkmalen des Anspruchs 1 und ein Genset nach Anspruch6.

Dadurch, dass unmittelbar bei der Detektion des Netzfehlers im Netz die Kraftstoffzufuhr an die Brennkraftmaschine erhöht wird, erreicht man, dass die Brennkraftmaschine auch bei einem länger anhaltenden Netzfehler nach Abklingen des Spannungseinbruches möglichst rasch wieder auf ihre Nennlast gelangt.

Eine Anwendung der Erfindung sind Magermotoren (Betrieb bei Lambda >1), da hier eine Möglichkeit der Anfettung und /oder Erhöhung des Ladedrucks gegeben ist.

Bei Motoren mit stöchiometrischer Verbrennung (Betrieb bei Lambda = 1) ist eine Anfettung nicht zielführend, hier kann die Erhöhung der Kraftstoffzufuhr durch eine Erhöhung des Ladedrucks bewirkt werden.

Im Unterschied zur oben angesprochenen nicht gattungsgemäßen, prioritätsälteren aber nicht vorveröffentlichten österreichischen Patentanmeldung A 832/2013 der Anmelderin geht es in der vorliegenden Anmeldung darum, die Auswirkungen nach Abklingen der subtransienten Effekte zu behandeln.

Bei gemischaufgeladenen Brennkraftmaschinen ist es von Vorteil, die Erhöhung der Kraftstoffzufuhr möglichst früh durchzuführen, d. h. unmittelbar bei Erkennen des zu einer verringerten Leistungsabgabe des Generators führenden Netzfehlers. Denn hier führt die Länge des Gemischpfades zu einer Transportverzögerung des Gemisches vom Ort der Kraftstoffdosierung (etwa in einem Gasmischer) bis zu einem Brennraum. Maßnahmen an der Kraftstoffdosierung werden also mit Zeitverzögerung im Brennraum wirksam. Bei Port Injection Maschinen, d.h. Brennkraftmaschinen, bei denen die Kraftstoffdosierung unmittelbar vor einem Brennraum erfolgt, kann der Eingriff zur Erhöhung der Kraftstoffzufuhr im Vergleich zu gemischaufgeladenen Brennkraftmaschinen später erfolgen.

Entgegen der allgemeinen Lehre und Intuition wird also im erfindungsgemäßen Verfahren bei Detektion eines Netzfehlers die Kraftstoffzufuhr nicht verringert oder beibehalten, sondern - im Gegenteil - erhöht. Mit Kraftstoffzufuhr ist die Zufuhr an chemischer Energie in Form von Kohlenwasserstoffen innerhalb einer Zeiteinheit gemeint.

Es kann vorgesehen sein, dass die Kraftstoffzufuhr an die Brennkraftmaschine bei einem Deaktivieren oder Verzögern einer Zündung erhöht wird.

Zusätzlich oder alternativ kann eine mechanische Bremsung der Brennkraftmaschine durch eine mechanische Bremse vorgesehen sein.

Maßnahmen, die ein Hochdrehen der Brennkraftmaschine bei Detektion eines dynamischen Netzfehler verhindern oder begrenzen sind beispielsweise eine mechanische Bremse, weiters Maßnahmen, die das Bremsmoment des Generators erhöhen wie etwa ein Erhöhen eines Erregerstromes am Generator, ein Senken des Ladedruckes, Abführen von Leistung in Ohmsche Widerstände etc. Allgemein gesagt sind dies Maßnahmen, die die Leistungsabgabe des Antriebsaggregates verringern.

Bevorzugt ist vorgesehen, dass die Kraftstoffzufuhr an die Brennkraftmaschine durch Senken des Lambda-Wertes des der Brennkraftmaschine zugeführten Gemisches erhöht wird. Liegt eine Gemischbildung vor Motoreintritt (meist vor Turbolader) vor, d.h. handelt es sich um eine gemischaufgeladene Brennkraftmaschine, dann erfolgt der Stelleingriff zur Erhöhung der Kraftstoffzufuhr durch Änderung der Gasmengensollvorgabe für das Gasdosierventil in jene Richtung, die ein Anfetten des Gemisches, d.h. eine Verringerung von Lambda bewirkt.

In einer Variante ist vorgesehen, dass die Kraftstoffzufuhr an die Brennkraftmaschine durch Anheben der Gasmenge für wenigstens ein Port Injection Ventil erhöht wird. Liegt eine Gemischbildung nach Turbolader vor, wie es beispielsweise für Brennkraftmaschine mit Port Injection der Fall ist, erfolgt der Stelleingriff zur Erhöhung der Kraftstoffzufuhr durch Anheben der Gasmengensollvorgabe für wenigstens ein Port Injection Ventil. In diesem Fall spricht man auch von luftaufgeladenen Motoren.

Es kann - vor allem bei einer gemischaufgeladenen Brennkraftmaschine - besonders vorteilhaft sein, dass die Kraftstoffzufuhr an die Brennkraftmaschine durch Anheben des Ladedruckes erhöht wird. Der Ladedruck kann beispielsweise durch Öffnen einer Drosselklappe, durch Erhöhung der effektiven Verdichterleistung (etwa durch Schließen des Verdichterbypasses oder Schließen eines Wastegates usw.), oder über Änderung von Turboladergeometrien bei Vorliegen von variablen Turboladergeometrien oder Kombinationen davon erfolgen.

Dieser Stelleingriff wird bevorzugt nach oder zeitgleich nach Zündung EIN wieder zurückgenommen.

Schutz wird auch begehrt für ein Genset mit einer Brennkraftmaschine, wobei die Steuer- und Regeleinheit der Brennkraftmaschine unmittelbar bei der Detektion eines Netzfehlers die Kraftstoffdosiereinrichtung so beeinflusst, dass die Kraftstoffzufuhr an die Brennkraftmaschine erhöht wird. Die Begrenzungseinrichtung zum Verhindern oder Begrenzen eines Hochdrehens der Brennkraftmaschine bei einem dynamischen Netzfehler kann beispielsweise durch eine Funktion der Steuer- und Regeleinheit realisiert sein, durch welche die weiter oben genannten Maßnahmen gesetzt werden, welche ein Hochdrehen der Brennkraftmaschine bei Detektion eines dynamischen Netzfehler verhindern oder begrenzen.

Der Begriff Genset ist die in der Fachwelt übliche Bezeichnung der Anordnung einer (stationären) Brennkraftmaschine mit einem Generator zur Stromerzeugung.

Bevorzugt kommt die Erfindung bei einem Stromversorgungsnetz zum Einsatz, bei welchem die in das Stromversorgungsnetz durch die erfindungsgemäße Brennkraftmaschine eingespeiste Leistung deutlich geringer (zum Beispiel weniger als 10 %, vorzugsweise weniger als 1 %) ist, als die Gesamtleistung des Stromversorgungsnetzes.

Die Brennkraftmaschine kann ein stationärer Motor, insbesondere ein stationärer Gasmotor sein.

Die Erfindung soll im Folgenden durch die Figuren näher erläutert werden. Dabei zeigt:
- Fig. 1: ein Schema einer Brennkraftmaschine mit den beteiligten Stellgliedern,
- Fig. 2: ein schematisches Diagramm der Stelleingriffe über der Zeit.

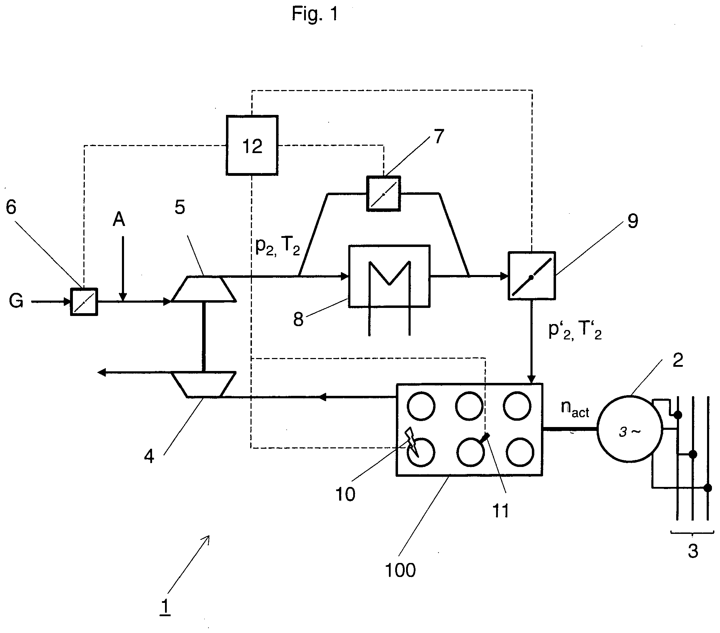

Fig. 1 zeigt ein Schema einer Brennkraftmaschine 1 mit einer Abgasturbine 4, einem Verdichter 5, einer Gasdosiereinrichtung 6, einem Verdichterbypassventil 7, einer Gemischkühleinrichtung 8 und einer Drosselklappe 9. Der eigentliche Motorblock der Brennkraftmaschine 1 trägt das Bezugszeichen 100. Der Gasdosiereinrichtung 6 wird Gas G zugeführt. Die Zufuhr von Luft A erfolgt in dieser Darstellung stromabwärts der Gasdosiereinrichtung 6. Es ist natürlich auch möglich, Gas G und Luft A in einer gemeinsamen Einrichtung, etwa einem Venturi-Mischer zuzuführen.

Die Brennkraftmaschine 1 weist eine Zündung 10 auf. Optional kann ein Port-Injection-Ventil 11 vorgesehen sein, durch welches Kraftstoff unmittelbar vor den Einlaßventilen den Brennräumen der Brennkraftmaschine 1 zuführbar ist. Das Port-Injection-Ventil 11 ist nur exemplarisch dargestellt. In der Konfiguration nach Figur 1 handelt es sich um einen gemischaufgeladenen Motor, bei welchem die Kraftstoffdosierung über die Gasdosiereinrichtung 6 (z.B. einen Gasmischer) erfolgt.

Zündung 10 und das Port-Injection-Ventil 11 sind vereinfacht nur für einen Zylinder eingezeichnet.

Mit der Brennkraftmaschine 1 ist über eine Welle ein Generator 2 verbunden. Der Generator 2 ist hier als 3-phasiger Synchrongenerator dargestellt. Der Generator 2 speist elektrische Leistung in das Energieversorgungsnetz 3. An der Welle zwischen Brennkraftmaschine 1 und Generator 2 kann - beispielsweise über eine Drehzahlmessung - die Drehzahl n_{act} festgestellt werden. Der entsprechende Sensor ist hier nicht gezeigt.
Eine Steuer- und Regeleinheit 12 gibt über Signalleitungen Befehle an die Stellglieder Gasdosiereinrichtung 6, einem Verdichterbypassventil 7, Drosselklappe 9, Zündung 10, Port-Injection-Ventil 11. Die Steuer- und Regeleinheit 12 erhält auch Signale von Motor- und oder Generatorgrößen, etwa der Drehzahl n_{act}.

Die Anordnung einer Brennkraftmaschine 1 mit Generator 2 wird als Genset 13 bezeichnet.

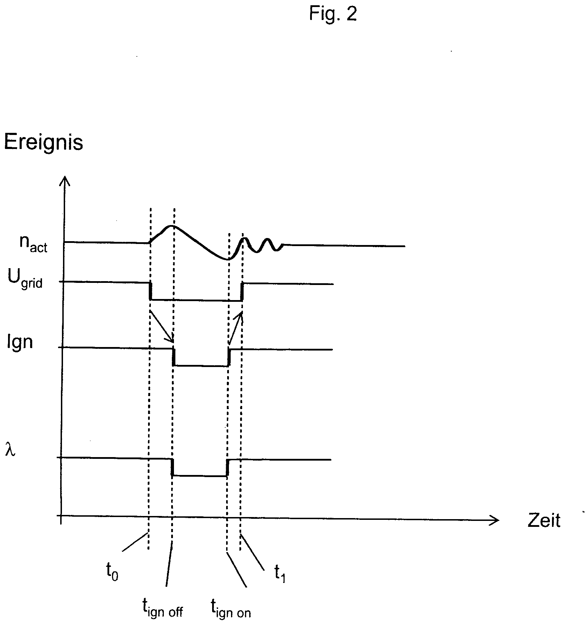

Fig. 2 zeigt ein Diagramm von Ereignissen und Stelleingriffen über der Zeit.

Die Kurve *n*_{*ac*t} zeigt den Verlauf der Drehzahl *n_{act}* der Brennkraftmaschine 1 vor, während und nach dem Netzfehler. Man erkennt, dass durch die Verringerung der Leistungsabgabe aufgrund des Netzfehlers beim Zeitpunkt *t₀* die Drehzahl zunächst ansteigt.

Mit Verzögerung greift die Maßnahme "Zündung Aus" beim Zeitpunkt *t_{ign off}* und die Drehzahl sinkt. Bei Erreichen einer vorgebbaren Mindestdrehzahl wir die Zündung wieder aktiviert. Weiters zu erkennen sind Nachschwing-Effekte nach Abklingen des Netzfehlers.

Die Kurve *U_{grid}* zeigt den Verlauf der Netzspannung über der Zeit. Zum Zeitpunkt *t₀* ist ein Spannungseinbruch im Netz zu beobachten, der bis zum Zeitpunkt *t₁* anhält.

Die Kurve *Ign* zeigt schematisch den Status der Fremdzündung der Brennkraftmaschine. Die Hochlage der Kurve bezeichnet dabei den Zündzustand im Normalbetrieb, die Tieflage der Kurve ein Deaktivieren der Zündung. Zum Zeitpunkt *t_{ign off}* wird die Zündung als Reaktion auf den Netzfehler, beispielsweise einen Spannungseinbruch, deaktiviert. Zum Zeitpunkt *t_{ign on}* wird die Zündung wieder auf den vor dem Netzfehler bestehenden Zündungsmodus zurückgestellt.

Auslösend für das Rückstellen der Zündung auf den ursprünglichen Zündungsmodus ist beispielsweise das Drehzahlsignal, d. h. wird ein Absinken der Drehzahl beobachtet, wird die Zündung wieder aktiviert bzw. auf den vor dem Netzfehler bestehenden Zündungsmodus zurückgestellt.
Alternativ zum Drehzahlsignal kann zum Beispiel ein Polradsignal verwendet werden.

In der Kurve darunter ist der Lambda-Wert, dies ist das Verhältnis von Verbrennungsluft zu Kraftstoff, über der Zeit aufgetragen. Der Begriff des Verbrennungsluftverhältnisses Lambda ist hinreichend bekannt. Ein Lambda von 1 bezeichnet den stöchiometrischen Zustand, d. h. dass genauso viel Luft zur Verfügung steht wie für die stöchiometrische Verbrennung des Kraftstoffes erforderlich ist. Ein Lambda von <1 bedeutet einen unterstöchiometrischen, d. h. fetten, Betrieb, während ein Lambda >1 ein überstöchiometrischen, d. h. mageren, Betrieb bezeichnet. In dem gezeigten Verlauf von Lambda ist zu erkennen, dass nach Detektion des Spannungseinbruches zum Zeitpunkt t_{ign-off} das Lambda des der Brennkraftmaschine zugeführten Gemisches verringert wird, d. h. dass das Gemisch angefettet wird. Vor Abklingen des Netzfehlers wird das Verbrennungsluftverhältnis Lambda wieder auf den vor dem Spannungseinbruch vorhandenen Wert zurückgestellt. Wie für den Eingriff auf die Zündung erläutert, kann das Drehzahlsignal als Auslöser für das Zurückstellen auf den Ausgangswert herangezogen werden.

Der besondere Vorteil des erfindungsgemäßen Verfahrens besteht darin, dass die Brennkraftmaschine nach Abklingen des Spannungseinbruches wesentlich rascher wieder auf Nennlast gelangt, als das mit den aus dem Stand der Technik bekannten Verfahren möglich ist.

Durch das Anfetten während des Spannungseinbruches wird gleichsam eine Regelreserve in Richtung höherer Lasten angelegt. Für kurze Anfahrzeiten (engl. *ramp-up*), gemeint ist das Wiedererlangen der Nennlast, hat sich das Beibehalten oder sogar das Verringern der Kraftstoffzufuhr während des Spannungseinbruchs als ungünstig herausgestellt.

Denn bei Wiederkehren der regulären Netzspannung kann ein großes Bremsmoment vom Generator auf die Brennkraftmaschine ausgeübt werden, sodass selbst bei beibehaltener Kraftstoffzufuhr ein Absinken der Drehzahl der Brennkraftmaschine bei Wiederherstellen der Netzspannung zu beobachten ist.

Beim erfindungsgemäßen Verfahren bzw. bei der erfindungsgemäßen Vorrichtung hingegen kann dieses Überschwingen kompensiert werden und die Brennkraftmaschine zeigt einen raschen Wiederanlauf ohne Drehzahleinbruch.

Bevorzugt ist vorgesehen, dass die Erkennung des Netzfehlers durch Betrachtung der Größen Spannung (des Generators), Strom (des Generators) und Frequenz (des Generators) erfolgt. Demgemäß braucht also nicht die Generatorleistung (Wirk-, Blind- oder Scheinleistung) - z. B. an den Anschlussklemmen - verfolgt werden, sondern es werden die weitaus sensibleren Indikatoren Spannung, Strom und Frequenz des Generators herangezogen.

Zur Erläuterung sei hinzugefügt, dass die im Rahmen dieser Offenbarung behandelten Spannungseinbrüche typischerweise eine Dauer unter 500 Millisekunden (ms) aufweisen. Der BDEW Transmission Code von 2007 sieht beispielsweise vor, dass sich Erzeugungsanlagen bei Spannungseinbrüchen bis auf 0 % der Netzspannung mit einer Dauer von kleiner/gleich 150 ms nicht vom Netz trennen dürfen.

### Liste der verwendeten Bezugszeichen:

- 1: Brennkraftmaschine
- 2: Generator
- 3: Energieversorgungsnetz
- 4: Abgasturbine
- 5: Verdichter
- 6: Gasdosiereinrichtung
- 7: Verdichterumblaseventil
- 8: Gemischkühler / Ladeluftkühler
- 9: Drosselklappe
- 10: Zündung
- 11: Port-Injenction-Ventil
- 12: Steuer- und Regeleinheit
- 13: Genset
- 100: Motorblock
- nacht: Drehzahl an Generatorwelle
- p₂: Ladedruck vor Gemischkühler / Ladeluftkühler
- T₂: Temperatur vor Gemischkühler / Ladeluftkühler
- p'₂: Ladedruck nach Gemischkühler / Ladeluftkühler
- T'₂: Temperatur nach Gemischkühler / Ladeluftkühler
- A: Luft
- G: Gas

## Patentansprüche

1. Verfahren zum Betreiben einer Brennkraftmaschine (1), wobei in der Brennkraftmaschine (1) ein Treibstoff-Luft-Gemisch verbrannt wird und die Brennkraftmaschine (1) einen Generator (2) antreibt, wobei der Generator (2) mit einem Energieversorgungsnetz (3) verbunden ist und Energie an das Energieversorgungsnetz (3) abgibt, und wobei bei Detektion eines dynamischen Netzfehlers, durch welchen die Leistungsabgabe des Generators (2) in das Energieversorgungsnetz (3) verringert ist, ein Hochdrehen der Brennkraftmaschine (1) durch Maßnahmen, welche die Leistungsabgabe der Brennkraftmaschine verringern, verhindert oder begrenzt wird, **dadurch gekennzeichnet, dass** unmittelbar bei der Detektion des dynamischen Netzfehlers im Energieversorgungsnetz die Kraftstoffzufuhr an die Brennkraftmaschine (1) erhöht wird.

2. Verfahren nach Anspruch 1, **dadurch gekennzeichnet, dass** die Zündung als Reaktion auf den Netzfehler deaktiviert wird.

3. Verfahren nach Anspruch 1 oder 2, **dadurch gekennzeichnet, dass** die Kraftstoffzufuhr an die Brennkraftmaschine (1) durch Senken des Lambda-Wertes des der Brennkraftmaschine (1) zugeführten Gemisches erhöht wird.

4. Verfahren nach Anspruch 1 oder 2, **dadurch gekennzeichnet, dass** die Kraftstoffzufuhr an die Brennkraftmaschine (1) durch Anheben der Gasmenge für wenigstens ein Port Injektion Ventil (11) erhöht wird.

5. Verfahren nach Anspruch 1 oder 2, **dadurch gekennzeichnet, dass** die Kraftstoffzufuhr an die Brennkraftmaschine (1) durch Anheben des Ladedruckes erhöht wird.

6. Genset bestehend aus einem Generator (2) und einer Brennkraftmaschine (1) mit
- wenigstens einem Sensor zur Detektion eines dynamischen Netzfehlers,
- wenigstens einer Begrenzungseinrichtung zum Verhindern oder Begrenzen eines Hochdrehens der Brennkraftmaschine (1) bei einem dynamischen Netzfehler,
- wenigstens einer Zündung (10),
- wenigstens einer Kraftstoffdosiereinrichtung (6, 11),
- einer Steuer- und Regeleinheit (12),
**dadurch gekennzeichnet, dass** die Steuer- und Regeleinheit (12) unmittelbar bei der Detektion des dynamischen Netzfehlers die Kraftstoffdosiereinrichtung (6, 11) so beeinflusst, dass die Kraftstoffzufuhr an die Brennkraftmaschine (1) erhöht wird.

7. Genset nach Anspruch 6 **dadurch gekennzeichnet, dass** der wenistens eine Sensor zur Dektektion des dynamischen Netzfehlers die Größen Spannung, Strom und Frequenz des Generators (2) betrachtet.

## Claims

1. A method of operating an internal combustion engine (1), wherein a fuel-air mixture is burnt in the internal combustion engine (1) and the internal combustion engine (1) drives a generator (2), wherein the generator (2) is connected to a power supply network (3) and delivers power to the power supply network (3) and wherein upon detection of a dynamic network fault by which the power delivery of the generator (2) into the power supply network (3) is reduced acceleration of the internal combustion engine (1) is prevented or limited by measures which reduce the power output of the internal combustion engine (1), **characterised in that** directly upon detection of the dynamic network fault in the power supply network the fuel feed to the internal combustion engine (1) is increased.

2. A method as set forth in claim 1 **characterised in that** in response to the network fault the ignition is deactivated.

3. A method as set forth in claim 1 or claim 2 **characterised in that** the fuel feed to the internal combustion engine (1) is increased by lowering the lambda value of the mixture fed to the internal combustion engine (1).

4. A method as set forth in claim 1 or claim 2 **characterised in that** the fuel feed to the internal combustion engine (1) is increased by increasing the amount of gas for at least one port injection valve (11).

5. A method as set forth in claim 1 or claim 2 **characterised in that** the fuel feed to the internal combustion engine (1) is increased by increasing the charge pressure.

6. A genset comprising a generator (2) and an internal combustion engine (1) with
- at least one sensor for detecting a dynamic network fault,
- at least one limiting device for preventing or limiting acceleration of the internal combustion engine (1) at a dynamic network fault,
- at least one ignition means (10),
- at least one fuel metering device (6, 11), and
- an open-loop and closed-loop control unit (12),
**characterised in that** directly upon the detection of the dynamic network fault the open-loop and closed-loop control unit (12) influences the fuel metering device (6, 11) so that the fuel feed to the internal combustion engine (1) is increased.

7. A genset (13) as set forth in claim 6, **characterised in that** at least one sensor for detecting a dynamic network fault observes the parameters voltage, current and frequency of the generator.

## Revendications

1. Procédé pour actionner un moteur à combustion interne (1), dans lequel un mélange air-carburant est brûlé dans le moteur à combustion interne et le moteur à combustion interne (1) commande un générateur (2), dans lequel le générateur (2) est relié à un réseau de distribution d'énergie (3) et délivre de l'énergie au réseau de distribution d'énergie, et dans lequel lors de la détection d'une erreur de réseau dynamique, par laquelle est réduite la puissance fournie du générateur (2) dans le réseau de distribution d'énergie (3), une montée en régime du moteur à combustion interne (1) par des mesures réduisant la puissance fournie du moteur à combustion interne, est empêchée ou limitée, **caractérisé en ce que** l'alimentation en carburant du moteur à combustion interne (1) est accrue directement lors de la détection de l'erreur de réseau dynamique dans le réseau de distribution d'énergie.

2. Procédé selon la revendication 1, **caractérisé en ce que** l'allumage en réaction à l'erreur de réseau est désactivé.

3. Procédé selon la revendication 1 ou 2, **caractérisé en ce que** l'alimentation en carburant du moteur à combustion interne (1) est accrue par abaissement de la valeur lambda du mélange fourni au moteur à combustion interne (1).

4. Procédé selon la revendication 1 ou 2, **caractérisé en ce que** l'alimentation en carburant du moteur à combustion interne (1) est accrue par élévation de la quantité de gaz pour au moins une soupape d'injection à orifice (11).

5. Procédé selon la revendication 1 ou 2, **caractérisé en ce que** l'alimentation en carburant du moteur à combustion interne (1) est accrue par élévation de la pression d'admission.

6. Ensemble générateur composé d'un générateur (2) et d'un moteur à combustion interne (1) avec
- au moins un détecteur destiné à la détection d'une erreur de réseau dynamique,
- au moins un dispositif de limitation pour empêcher ou limiter une montée en régime du moteur à combustion interne (1) lors d'une erreur de réseau dynamique,
- au moins un allumage (10),
- au moins un dispositif de dosage du carburant (6, 11),
- une unité de commande et de réglage (12),
**caractérisé en ce que** l'unité de commande et de réglage (12), lors de la détection d'une erreur de réseau dynamique, influe directement sur le dispositif de dosage du carburant (6, 11) de sorte que l'alimentation en carburant du moteur à combustion interne (1) est accrue.

7. Ensemble générateur selon la revendication 6, **caractérisé en ce que** le au moins un détecteur destiné à la détection de l'erreur de réseau dynamique tient compte des grandeurs de tension, de courant et de fréquence du générateur (2).
